# EUROPÄISCHE PATENTSCHRIFT

(11) **EP 1 733 019 B1**
(45) Veröffentlichungstag und Bekanntmachung des Hinweises auf die Patenterteilung: **21.04.2010**
(21) Anmeldenummer: 05707051.8
(22) Anmeldetag: 28.01.2005
(51) Int. Cl.: C11D 11/00, B01F 13/10, B01J 2/16

(54) **VERFAHREN ZUR HERSTELLUNG VON GRANULATEN UND DEREN EINSATZ IN WASCH- UND/ODER REINIGUGSMITTELN**
METHOD FOR PRODUCING GRANULES AND THE USE THEREOF IN WASHING AND/OR CLEANING AGENTS
PROCEDE POUR PRODUIRE DES GRANULES, ET LEUR UTILISATION DANS DES AGENTS DE LAVAGE ET/OU DE NETTOYAGE

(30) Priorität: 03.04.2004 DE 102004016497
(43) Veröffentlichungstag der Anmeldung: 20.12.2006
(60) Teilanmeldung: 07013641.1
(73) Patentinhaber: Henkel AG & Co. KGaA, 40589 Düsseldorf (DE)
(72) Erfinder: KRUSE, Hans-Friedrich, 41352 Korschenbroich (DE); Dr.Bernhard Orlich, 40547 Düsseldorf (DE); BLASEY, Gerhard, 40599 Düsseldorf (DE)
(86) Internationale Anmeldenummer: PCT/EP2005/000825
(87) Internationale Veröffentlichungsnummer: WO 2005/105973

(56) Entgegenhaltungen:
- WO-A-03/035817
- WO-A-2004/053037
- DE-A1- 19 601 841
- US-A1- 2003 134 769

## Beschreibung

Diese Anmeldung betrifft ein Verfahren zur Granulatherstellung, bei welchem ein oder mehrere Mischer/Granulator(en) und Wirbelschichtgranulatoren zum Einsatz kommen und bei welchem die Flüssigkomponente in bestimmter Weise auf Mischer/Granulator(en) und Wirbelschichtgranulator verteilt wird.

Zudem betrifft die Anmeldung Waschmitteltabletten sowie die Verwendung solcher Waschmitteltabletten in Wasch- und Geschirrspülmaschinen.

Wasch- und/oder Reinigungsmittel stehen dem Verbraucher in fester wie in flüssiger Form zur Verfügung, wobei insbesondere die festen Wasch- und/oder Reinigungsmittel wiederum in unterschiedlichen Konfektionsformen, beispielsweise als Pulver oder Kompaktate (z.B. Extrudate, Tabletten) angeboten werden. Ausgangspunkt für die Herstellung dieser unterschiedlichen Konfektionsformen ist in der Regel mindestens ein aus wasch- und/oder reinigungsaktiven Rohstoffen hergestelltes Wasch- und/oder Reinigungsmittelgranulat, welches mit weiteren Inhaltsstoffen beispielsweise zu Pulvern vermischt oder durch Druckeinwirkung zu Extrudaten oder Tabletten verdichtet werden kann.

Granulationsverfahren sind im Stand der Technik breit beschrieben. Granulate können neben der herkömmlichen Sprühtrocknung durch Feuchtgranulierung, durch Trockengranulierung bzw. Kompaktierung und durch Schmelzerstarrungsgranulierung hergestellt werden. Die gebräuchlichste Granuliertechnik ist die Feuchtgranulierung, da diese Technik den wenigsten Einschränkungen unterworfen ist und am sichersten zu Granulaten mit günstigen Eigenschaften führt. Die Feuchtgranulierung erfolgt durch Befeuchtung der Pulvermischungen mit Lösungsmitteln und/oder Lösungsmittelgemischen und/oder Lösungen von Bindemitteln und/oder Lösungen von Klebstoffen und wird vorzugsweise in Mischern/Granuiatoren, Wirbelbetten oder Sprühtürmen durchgeführt, wobei besagte Mischer/Granulatoren beispielsweise mit Rühr- und Knetwerkzeugen ausgestattet sein können. Für die Granulation sind jedoch auch Kombinationen von Wirbelbett(en) und Mischer(n)/Granulatoren, bzw. Kombinationen verschiedener Mischer/Granulatoren einsetzbar. Die Granulation erfolgt abhängig vom Ausgangsmaterial sowie den gewünschten Produkteigenschaften unter Einwirkung niedriger bis hoher Scherkräfte.

Die Aufgabe der Erfindung bestand darin, eine Möglichkeit zur Bereitstellung von Granulaten zur Verfügung zu stellen, bei welcher eine einfache Steuerung zumindest einer Granulateigenschaft bei der Granulatherstellung möglich ist.

Gegenstand der Erfindung ist dementsprechend ein Verfahren gemäß Anspruch 1. Vorzugsweise wird über die Aufteilung der Flüssigkomponente auf Mischer/Granulator und Wirbelschicht auch eine Einstellung der Partikelgröße des Granulates vorgenommen.

Das erfindungsgemäße Granulat kann vorzugsweise Bestandteil von Wasch- und/oder Reinigungsmittelformulierungen sein.

Dabei werden unter flüssigen Komponenten auch solche verstanden, die bei Raumtemperatur per se nicht flüssig sind, jedoch bei der jeweiligen Verarbeitungstemperatur fließfähig sind, insbesondere aber jene, welche bei Raumtemperatur bereits flüssig sind. Zusätzlich kommen bevorzugt Flüssigkeiten zum Einsatz, die mit anderen Flüssigkeiten und / oder Feststoffen Reaktionen eingehen können. Hierbei handelt es sich vorzugsweise um Neutralisationsreaktionen von waschaktiven Bestandteilen.

Überraschenderweise wurde gefunden, daß bei der Granulierung fester und flüssiger Komponenten unter Verwendung eines Mischers/Granulators mit nachgeschaltetem Wirbelschichtgranulator eine Einstellung der Granulatlöslichkeit sowie vorzugsweise auch der Partikelgröße des Granulates über die Aufteilung der Flüssigkomponente auf Mischer/Granulator und Wirbelschicht vornehmbar ist. Es wurde festgestellt, daß sich die Granulatlöslichkeit dann immer weiter verbessert, wenn die im gesamtem Verfahren zum Einsatz kommenden Flüssigkomponenten in steigendem Maße im Mischer/Granulator und in sinkendem Maße in der Wirbelschicht zugegeben werden. Vorzugsweise erhält man dann auch feinteiligere Granulate.

Beim erfindungsgemäßen Verfahren werden die einzelnen Verfahrensstufen bevorzugt kontinuierlich durchlaufen.

In der ersten Verfahrensstufe des erfindungsgemäßen Verfahrens werden insbesondere bekannte, übliche feste und flüssige Bestandteile von Wasch- und/oder Reinigungsmitteln in an sich üblicher Weise granuliert, wobei alle bekannten Mischer, Granulatoren und/oder Verdichter eingesetzt werden können. Beispielsweise können Apparate der Firmen Vomm, Lödige, Schugi, Eirich, Henschel oder Fukae eingesetzt werden.

Dabei ist es möglich, die Granulierung in einem Mischer/Granulator oder in mehreren hintereinandergeschalteten Mischem/Granulatoren, welche gegebenenfalls unterschiedliche Misch- und Granuliergeschwindigkeiten aufweisen, durchzuführen. In einer bevorzugten Ausführungsform der Erfindung wird die erste Verfahrensstufe in zwei hintereinandergeschalteten Mischern/Granulatoren durchgeführt. Dabei ist es vorteilhaft, wenn zunächst in einem Hochgeschwindigkeitsmischer/Granulator ein Vorgranulat erstellt wird und anschließend gegebenenfalls unter Zugabe weiterer fester und flüssiger Bestandteile die weitere Granulierung und Verdichtung in einem langsamer laufenden Mischer/Granulator erfolgt. Die Verweilzeit im Hochgeschwindigkeitsmischer/Granulator liegt vorzugsweise unter 1 Minute, insbesondere deutlich unter 1 Minute, während die Verweilzeiten in den bevorzugt kontinuierlich arbeitenden langsameren Granulatoren vorzugsweise bei bis zu mehreren Minuten, vorteilhafterweise zwischen 1 und 10 Minuten, in weiter vorteilhafter Weise zwischen 2 und 8 Minuten, insbesondere aber zwischen 3 und 5 Minuten liegen.

Insbesondere ist jedoch auch eine Verfahrensführung bevorzugt, die zwei hintereinandergeschaltete Mischer/Granulatoren verwendet, wobei zunächst der langsamer laufende Mischer/Granulator und anschließend der Hochgeschwindigkeitsmischer/Granulator eingesetzt werden, wie sie beispielsweise auch in dem europäischen Patent EP 0 642 576 B1 beschrieben wird.

Die Zugabe der festen und flüssigen Bestandteile im ersten Verfahrensschritt kann in beliebiger Reihenfolge erfolgen. Vorzugsweise werden jedoch die flüssigen Bestandteile auf die bereits im Mischer/Granulator befindlichen, durch Mischwerkzeuge oder durch die Rotation der Mischertrommel bewegte Feststoffe versprüht, Im Rahmen dieser Erfindung zählen zu den flüssigen Bestandteilen auch bei der jeweiligen Verarbeitungstemperatur pumpfähige und insbesondere versprühbare flüssige Komponenten.

Der zweite Verfahrensschritt erfolgt in einer Wirbelschicht. Flüssigkeiten werden durch Versprühen, vorzugsweise feinstverteilt auf das fluidisierte Granulat der ersten Verfahrensstufe aufgetragen. Die Fluidisierung des Granulates erfolgt mit Luft, die je nach Art der Verfahrensvariante und der Flüssigkomponente unterschiedliche Temperatur aufweisen kann. Bei der Flüssigkomponente kann es sich um die gleiche Komponente wie in der ersten Verfahrensstufe handeln. Es kann jedoch auch eine unterschiedliche Komponente sein.

Art und Menge der bevorzugt eingesetzten festen und flüssigen Bestandteile werden im folgenden aufgeführt.

Die Mengen der Flüssigkomponente, welche in den Mischer/Gfanulator bzw. die Wirbelschicht gegeben werden, hängen von der gewünschten Löslichkeiten der als Verfahrensendprodukt resultierenden Granulate ab.

Granulates, bei denen ein höherer Anteil der Flüssigkomponente in den Mischer/Granulator gegeben wurde, weisen eine bessere Löslichkeit auf als jene, bei denen ein höherer Anteil der Flüssigkomponente in die Wirbelschicht gegeben wurde.

Granulate, bei deren Herstellung ein höherer Anteil der Flüssigkomponente in den Mischer/Granulator gegeben wurde und bei deren Herstellung die Zugabe flüssiger Komponenten in den Mischer/Granulator und den Wirbelschichtgranulator so aufgeteilt ist, daß nicht mehr als 5 Gew.-% der bei der Granulatherstellung eingesetzten flüssigen Komponenten in den Wirbelschichtgranulator gegeben werden, sind Granulate mit guter Löslichkeit.

Als weitere Einflussgröße zur Einstellung der gewünschten Löslichkeit der Granulate wurde im erfindungsgemäßen Verfahren die Positionierung der Düsen in der Wirbelschicht gefunden.

Ein Verfahren, bei welchem die Düsen des Wirbelschichtgranulators oberhalb des fluidisierten Produkt positioniert sind und in Durchflussrichtung der Wirbelschicht sprühen, ist eine bevorzugte Ausführungsform dieser Erfindung. Durch diese Verfahrensweise lässt sich die Korngröße des Granulates und die Granulatlöslichkeit, im Vergleich zu einer Verfahrensweise bei der die Düsen entgegengesetzt der Durchflussrichtung der Wirbelschicht und/oder innerhalb der fluidisierten Schicht sprühen, gezielt herabsetzen.

Zeichnet sich das Verfahren also dadurch aus, daß die Verdüsung entgegen der Durchflussrichtung der Wirbelschicht und/oder im fluidisierten Produkt erfolgt, liegt ebenfalls eine bevorzugte Ausführungsform vor.

Folgerichtig sind Positionierungen der Düsen, bei denen gröbere Granulate mit heraufgesetzter Löslichkeit erhalten werden, ebenfalls bevorzugte Ausführungsformen der Erfindung.

Bei der Granulatherstellung kommen naturgemäß auch feste Komponenten zum Einsatz. In einer bevorzugten Ausführungsform wird im Mischer/Granulator ein partikuläres Ausgangsmaterial verarbeitet, welches vorzugsweise für den Einsatz in Wasch- und/oder Reinigungsmitteln geeignet ist, wobei insbesondere zumindest anteilsweise Substanzen ausgewählt aus der Gruppe der Gerüststoffe, Polymere und/oder Neutralsalze eingesetzt werden.

Dabei enthält das partikuläre Ausgangsmaterial vorteilhafterweise wenigstens anteilsweise feste Neutralisationsmittel, vorzugsweise eine oder mehrere Substanzen aus der Gruppe Natriumcarbonat, Natriumhydroxid, Natriumsesquicarbonat, Kaliumhydroxid und/oder Kaliumcarbonat, wobei das Vorhandensein von Natriumcarbonat stark bevorzugt ist, was wiederum einer bevorzugten Ausführungsform der Erfindung entspricht. Vorteilhafter kann ein Neutralisationsmittel auch in flüssiger Form zugegeben werden, insbesondere sowohl in fester wie in flüssiger Form.

Besonders vorteilhaftes partikuläres Ausgangsmaterial enthält Feststoffe aus der Gruppe der Silikate, Aluminiumsilikate, Sulfate, Citrate und/oder Phosphate. Kommen solche Feststoffe im erfindungsgemäßen Verfahren zum Einsatz, so handelt es sich ebenfalls um eine bevorzuge Ausführungsform der Erfindung.

Als flüssige Komponente werden vorteilhafterweise solche Materialien eingesetzt, die ausgewählt sind aus der Gruppe flüssige Bindemittel und/oder Lösungen von wasch- und/oder reinigungsaktiven Substanzen und/oder Dispersionen, insbesondere Suspensionen und/oder Emulsionen, von wasch- und/oder reinigungsaktiven Substanzen. Wird das erfindungsgemäße Verfahren unter Verwendung solcher flüssigen Komponenten durchgeführt, so liegt eine bevorzugte Ausführungsform der Erfindung vor.

Gemäß einer weiteren bevorzugten Ausführungsform der Erfindung enthält die flüssige Komponente zumindest anteilsweise Aniontensidsäure, vorzugsweise eine oder mehrere Substanz(en) aus der Gruppe der Carbonsäuren, der Schwefelsäurehalbester und der Sulfonsäuren, vorteilhafterweise aus der Gruppe der Fettsäuren, der Fettalkylschwefelsäuren und der Alkylarylsulfonsäuren, insbesondere aus der Gruppe der C₈₋₁₆-, insbesondere der C₉₋₁₃-Alkylbenzolsulfonsäuren.

Bei einer weiteren bevorzugten Ausführungsform enthält die flüssige Komponente zumindest anteilsweise nichtionische Tenside, die bei der Verfahrenstemperatur in flüssiger Form vorliegen.

Dabei wird die Menge der eingesetzten Aniontensidsäuren vorteilhafterweise so begrenzt, daß der Gehalt der Verfahrensprodukte an neutralisierten Aniontensidsäuren maximal 50 Gew.-%, vorzugsweise 8 bis 42 Gew.-%, besonders bevorzugt 10 bis 35 Gew.-% und insbesondere 15 bis 25 Gew.-% beträgt, was wiederum einer bevorzugten Ausführungsform der Erfindung entspricht.

Bei einer weiteren bevorzugten Ausführungsform enthält die flüssige Komponente zumindest anteilsweise nichtionische Tenside; die bei der Verfahrenstemperatur in flüssiger Form vorliegen.

In einer weiteren bevorzugten Ausführungsform der Erfindung werden bereits alle Aniontensidsäure enthaltenden Bestandteile, insbesondere alle tensidischen Bestandteile in der ersten Verfahrensstufe eingebracht, d.h. die flüssige Komponente, welche in der Wirbelschicht zugegeben wird, ist dann frei von Aniontensidsäure, insbesondere gänzlich tensidfrei.

Besonders bevorzugte Flüssigkomponenten enthalten zumindest anteilsweise Silikat-und/oder (Co-)Polymerlösungen, insbesondere wässrige Lösungen von Natriumsilikaten und/oder polymeren Polycarboxylaten. Gemäß einer bevorzugten Ausführungsform werden alle Silikat- und/oder (Co-)Polymerlösungen enthaltenden Bestandteile in der zweiten Verfahrensstufe eingebracht.

Wenn das Gemisch nach Entnahme aus dem Mischer/Granulator und/oder nach Entnahme aus dem Wirbelschichtgranulator von Grob- und/oder Feinanteilen getrennt und diese Grob- und/oder Feinanteile im Anschluß in den Mischer/Granulator und/oder in den Wirbelschichtgranulator zurückgeführt werden, liegt eine bevorzugte Ausführungsform der Erfindung vor, insbesondere dann, wenn der Grobanteil vor der Rückführung in den Mischer/Granulator und/oder in den Wirbelschichtgranulator vermahlen wird.

Gemäß einer bevorzugten Ausführungsform werden die erfindungsgemäß erhaltenen Granulate in einem Aufbereitungsschritt mit weiteren Bestandteilen von Wasch- und/oder Reinigungsmitteln vermischt.

Vorteilhafterweise können alle bekannten Inhaltsstoffe von Wasch- und/oder Reinigungsmitteln in dem erfindungsgemäßen Verfahren zum Einsatz kommen, insbesondere auch dadurch, daß die erfindungsgemäß erhaltenen Granulate in einem Aufbereitungsschritt mit weiteren Bestandteilen von Wasch- und/oder Reinigungsmitteln vermischt werden. Insbesondere ist der Einsatz von anionischen und nichtionischen Tensiden, aber auch von Kationtensiden, Amphotensiden und zwitterionischen Tensiden, anorganischen und organischen Buildersubstanzen, Bleichmitteln, alkalischen und neutralen Salzen, Vergrauungsinhibitoren, Enzymen und Enzymstabilisatoren und üblichen Kleinkomponenten, wie optischen Aufhellern und Farb- und Duftstoffen bevorzugt, sowohl im erfindungsgemäßen Granulat und/oder als zumischbarer Bestandteil. Die festen Bestandteile können als Pulver und/oder Granulate in das Verfahren eingebracht werden, beispielsweise bei der Granulation und/oder als zumischbarer Bestandteil. Bei den festen Ausgangsstoffen, die beispielsweise in Pulverform eingesetzt werden, handelt es sich beispielsweise um Zeolith, insbesondere Zeolith A und/oder P, Natriumcarbonat, Tripolyphosphat, amorphe oder kristalline Silikate oder Natriumsulfat. In einer weiteren bevorzugten Ausführungsform der Erfindung werden als feste Bestandteile auch Compounds eingesetzt, die mehr als einen Wirkstoff enthalten. Hierzu gehören beispielsweise sprühgetrocknete Pulver (sogenannte Turmpulver), aber auch konzentrierte Tensidgranulate, beispielsweise solche, die 40 bis 95 Gew.-% an Alkylsulfaten und/oder Alkylbenzolsulfonaten enthalten.
Es ist vorteilhaft, die erfindungsgemäßen Granulate mit weiteren festen Bestandteilen, Pulvern, Granulaten und festen Compounds aufzubereiten. Die nachfolgend beschriebenen typischen Wasch- und/oder Reinigungsmittelinhaltsstoffe können also im erfindungsgemäßen Granulat oder in dem Granulat zuzumischenden Bestandteilen oder in beiden enthalten sein.

Als anionische Tenside werden beispielsweise solche vom Typ der Sulfonate und Sulfate eingesetzt.

Als Tenside vom Sulfonat-Typ kommen vorzugsweise C₉-C₁₃-Alkylbenzolsulfonate, Olefinsulfonate, d. h. Gemische aus Alken- und Hydroxyalkansulfonaten sowie Disulfonaten, wie man sie beispielsweise aus C₁₂-C₁₈-Monoolefinen mit end- oder innenständiger Doppelbindung durch Sulfonieren mit gasförmigem Schwefeltrioxid und anschließende alkalische oder saure Hydrolyse der Sulfonierungsprodukte erhält, in Betracht.

Geeignet sind auch Alkansulfonate, die aus C₁₂-C₁₈-Alkanen beispielsweise durch Sulfochlorierung oder Sulfoxidation mit anschließender Hydrolyse bzw. Neutralisation gewonnen werden.

Geeignet sind auch die Ester von α-Sulfofettsäuren (Estersulfonate), z. B. die α-sulfonierten Methylester der hydrierten Kokos-, Palmkern- oder Talgfettsäuren.

Als Alk(en)ylsulfate werden die Alkali- und insbesondere die Natriumsalze der Schwefelsäurehalbester der C₁₂-C₁₈Fettalkohole beispielsweise aus Kokosfettalkohol, Taigfettalkohol, Lauryl-, Myristyl-, Cetyl- oder Stearylalkohol oder der C₁₀-C₂₀-Oxoalkohole und diejenigen Halbester sekundärer Alkohole dieser Kettenlänge bevorzugt. Weiterhin bevorzugt sind Alk(en)ylsulfate der genannten Kettenlänge, welche einen synthetischen, auf petrochemischer Basis hergestellten geradkettigen Alkylrest enthalten, die ein analoges Abbauverhalten besitzen wie die adäquaten Verbindungen auf der Basis von fettchemischen Rohstoffen. Aus waschtechnischem Interesse sind C₁₆-C₁₈-Alk(en)ylsulfate insbesondere bevorzugt. Dabei kann es auch von besonderem Vorteil und insbesondere für maschinelle Waschmittel von Vorteil sein, C₁₆-C₁₈-Alk(en)ylsulfate in Kombination mit niedriger schmelzenden Aniontensiden und insbesondere mit solchen Aniontensiden, die einen niedrigeren Krafft-Punkt aufweisen und bei relativ niedrigen Waschtemperaturen von beispielsweise Raumtemperatur bis 40°C eine geringe Kristallisationsneigung zeigen, einzusetzen. In einer bevorzugten Ausführungsform der Erfindung enthalten die Mittel daher Mischungen aus kurzkettigen und langkettigen Fettalkylsulfaten, vorzugsweise Mischungen aus C₁₂-C₁₄-Fettalkylsulfaten oder C₁₂-C₁₈-Fettalkylsulfaten mit C₁₆-C₁₈-Fettalkylsulfaten und insbesondere C₁₂-C₁₆-Fettalkylsulfaten mit C₁₆-C₁₈- Fettalkylsulfaten. In einer weiteren bevorzugten Ausführungsform der Erfindung werden jedoch nicht nur gesättigte Alkylsulfate, sondern auch ungesättigte Alkenylsulfate mit einer Alkenylkettenlänge von vorzugsweise C₁₆ bis C₂₂ eingesetzt. Dabei sind insbesondere Mischungen aus gesättigten, überwiegend aus C₁₈ bestehenden sulfierten Fettalkoholen und ungesättigten, überwiegend aus C₁₈ bestehenden sulfierten Fettalkoholen bevorzugt, beispielsweise solche, die sich von festen oder flüssigen Fettalkoholmischungen des Typs HD-Ocenol® (Handelsprodukt des Anmelders) ableiten. Dabei sind Gewichtsverhältnisse von Alkylsulfaten zu Alkenylsulfaten von 10 : 1 bis 1 : 2 und insbesondere von etwa 5 : 1 bis 1 : 1 bevorzugt. Eine bevorzugte Verwendung finden Gemische, in denen der Anteil der Alkylreste zu 15 bis 40 Gew.-% auf C₁₂, zu 5 bis 15 Gew.-% auf C ₁₄, zu 15 bis 25 Gew.-% auf C₁₆, zu 30 bis 60 Gew.-% auf C₁₈, und unter 1 Gew.-% auf C₁₀ verteilt sind.

Auch 2,3-Alkylsulfate, welche beispielsweise gemäß den US- Patentschriften 3,234,258 oder 5,075,041 hergestellt werden und als Handelsprodukte der Shell Oil Company unter dem Namen DAN® erhalten werden können, sind geeignete Aniontenside.

Als weitere anionische Tenside kommen insbesondere Seifen, vorzugsweise in Mengen von 0,2 bis 10 Gew.-%, in Betracht. Geeignet sind insbesondere gesättigte Fettsäureseifen, wie die Salze der Laurinsäure, Myristinsäure, Palmitinsäure, Stearinsäure, hydrierten Erucasäure und Behensäure sowie insbesondere aus natürlichen Fettsäuren, z. B. Kokos-, Palmkern- oder Talgfettsäuren, abgeleitete Seifengemische.

Die anionischen Tenside können in Form ihrer Natrium-, Kalium- oder Ammoniumsalze sowie als lösliche Salze organischer Basen, wie Mono-, Di- oder Triethanolamin, vorliegen. Vorzugsweise liegen die anionischen Tenside in Form ihrer Natrium- oder Kaliumsalze, insbesondere in Form der Natriumsalze vor. Ihr Gehalt in den erfindungsgemäß hergestellten Granulaten kann vorzugsweise 3 bis 20 Gew.-% betragen, kann jedoch auch darüber hinausgehen. Bevorzugte Aniontenside sind Fettalkylsulfate, Alkylbenzolsulfonate, insbesondere in Kombination mit Seife, sowie Sulfosuccinate.

Als nichtionische Tenside werden vorzugsweise alkoxylierte, vorteilhafterweise ethoxylierte, insbesondere primäre Alkohole mit vorzugsweise 8 bis 18 C-Atomen und durchschnittlich 1 bis 12 Mol Ethylenoxid (EO) pro Mol Alkohol eingesetzt, in denen der Alkoholrest linear oder bevorzugt in 2-Stellung methylverzweigt sein kann bzw. lineare und methylverzweigte Reste im Gemisch enthalten kann, so wie sie üblicherweise in Oxoalkoholresten vorliegen. Insbesondere sind jedoch Alkoholethoxylate mit linearen Resten aus Alkoholen nativen Ursprungs mit 12 bis 18 C-Atomen, z. B. aus Kokos-, Palm-, Talgfett- oder Oleylalkohol, und durchschnittlich 2 bis 8 EO pro Mol Alkohol bevorzugt. Zu den bevorzugten ethoxylierten Alkoholen gehören beispielsweise C₁₂-C₁₄-Alkohole mit 3 EO oder 4 EO, C₉-C₁₁-Alkohole mit 7 EO, C ₁₃-C₁₅-Alkohole mit 3 EO, 5 EO, 7 EO oder 8 EO, C₁₂&8211;C₁₈-Alkohole mit 3 EO, 5 EO oder 7 EO und Mischungen aus diesen, wie Mischungen aus C₁₂-C₁₄- Alkohol mit 3 EO und C₁₂-C₁₈-Alkohol mit 5 EO. Die angegebenen Ethoxylierungsgrade stellen statistische Mittelwerte dar, die für ein spezielles Produkt eine ganze oder eine gebrochene Zahl sein können. Bevorzugte Alkoholethoxylate weisen eine eingeengte Homologenverteilung auf (narrow range ethoxylates, NRE). Zusätzlich zu diesen nichtionischen Tensiden können auch Fettalkohole mit mehr als 12 EO eingesetzt werden. Beispiele hierfür sind Talgfettalkohol mit 14 EO, 25 EO, 30 EO oder 40 EO. Neben bei Raumtemperatur flüssigen und bei der Verarbeitungstemperatur fließfähigen Niotensiden können in dem erfindungsgemäßen Verfahren selbstverständlich auch Niotenside eingesetzt werden, die selbst bei der Verarbeitungstemperatur noch fest, aber vorzugsweise plastisch erweicht sind. Der Gehalt der erfindungsgemäß hergestellten Granulate an Niotensiden beträgt insbesondere 5 bis 15 Gew.-%.

Außerdem können als weitere nichtionische Tenside auch Alkylglykoside der allgemeinen Formel RO(G)ₓ eingesetzt werden, in der R einen primären geradkettigen oder methylverzweigten, insbesondere in 2-Stellung methylverzweigten aliphatischen Rest mit 8 bis 22, vorzugsweise 12 bis 18 C-Atomen bedeutet und G das Symbol ist, das für eine Glykoseeinheit mit 5 oder 6 C-Atomen, vorzugsweise für Glucose, steht. Der Oligomerisierungsgrad x, der die Verteilung von Monoglykosiden und Oligoglykosiden angibt, ist eine beliebige Zahl zwischen 1 und 10; vorzugsweise liegt x bei 1 ,2 bis 1,4.

Eine weitere Klasse bevorzugt eingesetzter nichtionischer Tenside, die entweder als alleiniges nichtionisches Tensid oder in Kombination mit anderen nichtionischen Tensiden, insbesondere zusammen mit alkoxylierten Fettalkoholen und/oder Alkylglykosiden, eingesetzt werden, sind alkoxylierte, vorzugsweise ethoxylierte oder ethoxylierte und propoxylierte Fettsäurealkylester, vorzugsweise mit 1 bis 4 Kohlenstoffatomen in der Alkylkette, insbesondere Fettsäuremethylester, wie sie beispielsweise in der japanischen Patentanmeldung JP 58/217598 beschrieben sind oder die vorzugsweise nach dem in der internationalen Patentanmeldung WO-A-90/1 3533 beschriebenen Verfahren hergestellt werden. Besonders bevorzugt sind C₁₂-C₁₈-Fettsäuremethylester mit durchschnittlich 3 bis 15 EO, insbesondere mit durchschnittlich 5 bis 12 EO.

Auch nichtionische Tenside vom Typ der Aminoxide, beispielsweise N- Kokosalkyl-N,N-dimethylaminoxid und N-Talgalkyl-N,N- dihydroxyethylaminoxid, und der Fettsäurealkanolamide können geeignet sein. Die Menge dieser nichtionischen Tenside beträgt vorzugsweise nicht mehr als die der ethoxylierten Fettalkohole, insbesondere nicht mehr als die Hälfte davon.

Weitere geeignete Tenside sind Polyhydroxyfettsäureamide der Formel (I), 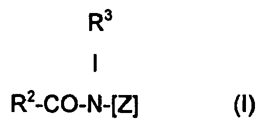 in der R²CO für einen aliphatischen Acylrest mit 6 bis 22 Kohlenstoffatomen, R³ für Wasserstoff, einen Alkyl- oder Hydroxyalkylrest mit 1 bis 4 Kohlenstoffatomen und [Z] für einen linearen oder verzweigten Polyhydroxyalkylrest mit 3 bis 10 Kohlenstoffatomen und 3 bis 10 Hydroxylgruppen steht. Vorzugsweise leiten sich die Polyhydroxyfettsäureamide von reduzierenden Zuckern mit 5 oder 6 Kohlenstoffatomen, insbesondere von der Glucose ab.

Zur Gruppe der Polyhydroxyfettsäureamide gehören auch Verbindungen der Formel (II), 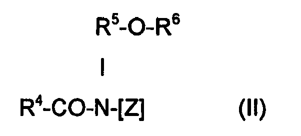 in der R⁴ für einen linearen oder verzweigten Alkyl- oder Alkenylrest mit 7 bis 12 Kohlenstoffatomen, R⁵ für einen linearen, verzweigten oder cyclischen Alkylrest oder einen Arylrest mit 2 bis 8 Kohlenstoffatomen und R⁶ für einen linearen, verzweigten oder cyclischen Alkylrest oder einen Arylrest oder einen Oxy-Alkylrest mit 1 bis 8 Kohlenstoffatomen steht, wobei C₁-C₄-Alkyl- oder Phenylreste bevorzugt sind, und [Z] für einen linearen Polyhydroxyalkylrest, dessen Alkylkette mit mindestens zwei Hydroxylgruppen substituiert ist, oder alkoxylierte, vorzugsweise ethoxylierte oder propoxylierte Derivate dieses Restes steht. [Z] wird auch hier vorzugsweise durch reduktive Aminierung eines Zuckers wie Glucose, Fructose, Maltose, Lactose, Galactose, Mannose oder Xylose erhalten. Die N- Alkoxy- oder N-Aryloxy-substituierten Verbindungen können dann beispielsweise nach der Lehre der internationalen Patentanmeldung WO-A-95/07331 durch Umsetzung mit Fettsäuremethylestem in Gegenwart eines Alkoxids als Katalysator in die gewünschten Polyhydroxyfettsäureamide überführt werden.

Geeignete Substitute bzw. Teilsubstitute für Phosphate und Zeolithe sind kristalline, schichtförmige Natriumsilikate der allgemeinen Formel NaMSiₓO₂₊₁*yH₂O, wobei M Natrium oder Wasserstoff bedeutet, x eine Zahl von 1 ,9 bis 4 und y eine Zahl von 0 bis 20 ist und bevorzugte Werte für x 2, 3 oder 4 sind. Derartige kristalline Schichtsilikate werden beispielsweise in der europäischen Patentanmeldung EP-A-0 164 514 beschrieben. Bevorzugte kristalline Schichtsilikate der angegebenen Formel sind solche, in denen M für Natrium steht und x die Werte 2 oder 3 annimmt. Insbesondere sind sowohl β- als auch δ-Natriumdisilikate Na₂Si₂O₅*yH₂O bevorzugt.

Zu den bevorzugten Buildersubstanzen gehören auch amorphe Natriumsilikate mit einem Modul Na₂O SiO₂ von 1 : 2 bis 1 : 3,3, vorzugsweise von 1 : 2 bis 1 : 2,8 und insbesondere von 1 : 2 bis 1 : 2,6, welche löseverzögert sind und Sekundärwascheigenschaften aufweisen.

Brauchbare organische Gerüstsubstanzen sind beispielsweise die bevorzugt in Form ihrer Natriumsalze eingesetzten Polycarbonsäuren, wie Citronensäure, Adipinsäure, Bernsteinsäure, Glutarsäure, Weinsäure, Zuckersäuren, Aminocarbonsäuren, Nitrilotriessigsäure (NTA), sofern ein derartiger Einsatz aus ökologischen Gründen nicht zu beanstanden ist, sowie Mischungen aus diesen. Bevorzugte Salze sind die Salze der Polycarbonsäuren wie Citronensäure, Adipinsäure, Bernsteinsäure, Glutarsäure, Weinsäure, Zuckersäuren und Mischungen aus diesen.

Geeignete polymere Polycarboxylate sind beispielsweise die Natriumsalze der Polyacrylsäure oder der Polymethacrylsäure, beispielsweise solche mit einer relativen Molekülmasse von 800 bis 150000 (auf Säure bezogen). Geeignete (co-)polymere Polycarboxylate sind insbesondere solche der Acrylsäure mit Methacrylsäure und der Acrylsäure oder Methacrylsäure mit Maleinsäure. Als besonders geeignet haben sich Copolymere der Acrylsäure mit Maleinsäure erwiesen, die 50 bis 90 Gew.-% Acrylsäure und 50 bis 10 Gew.-% Maleinsäure enthalten. Ihre relative Molekülmasse, bezogen auf freie Säuren, beträgt im allgemeinen 5000 bis 200000, vorzugsweise 10000 bis 120000 und insbesondere 50000 bis 100000.

Der Gehalt der Granulate an (co-)polymeren Polycarboxylaten beträgt vorzugsweise 0,5 bis 8 Gew.-%.

Dabei ist es insbesondere bevorzugt, daß wenigstens ein Teil, vorzugsweise bis 100 Gew.-% der eingesetzten (co-)polymeren Polycarboxylate nicht als fester Bestandteil, sondern vorzugsweise in Form einer etwa 20 bis 55 Gew.-%-. igen wässrigen Lösung als Bestandteil der Granulierflüssigkeit eingesetzt wird.

Insbesondere bevorzugt sind auch biologisch abbaubare Polymere aus mehr als zwei verschiedenen Monomereinheiten, beispielsweise solche, die gemäß der DE-A 43 00 772 als Monomere Salze der Acrylsäure und der Maleinsäure sowie Vinylalkohol bzw. Vinylalkohol-Derivate oder gemäß der DE-C 42 21 381 als Monomere Salze der Acrylsäure und der 2- Alkylallylsulfonsäure sowie Zucker-Derivate enthalten.

Weitere bevorzugte Copolymere sind solche, die in den deutschen Patentanmeldungen DE-A 43 03 320 und DE-A 44 17 734 beschrieben werden und als Monomere vorzugsweise Acrolein und Acrylsäure/Acrylsäuresalze bzw. Acrolein und Vinylacetat aufweisen.

Die (co-)polymeren Polycarboxylate können entweder als Pulver oder als wässrige Lösung eingesetzt werden, wobei sie insbesondere in wässriger Form als nicht-tensidischer Wasch- und/oder Reinigungsmittelinhaltsstoff zur Nachbehandlung eingesetzt werden können.

Zusätzlich können die Mittel auch Komponenten enthalten, welche die Öl- und Fettauswaschbarkeit aus Textilien positiv beeinflussen. Dieser Effekt wird besonders deutlich, wenn ein Textil verschmutzt wird, das bereits vorher mehrfach mit einem erfindungsgemäßen Waschmittel, das diese öl- und fettlösende Komponente enthält, gewaschen wurde. Zu den bevorzugten öl- und fettlösenden Komponenten zählen beispielsweise nichtionische Celluloseether wie Methylcellulose und Methylhydroxypropylcellulose mit einem Anteil an Methoxyl-Gruppen von 15 bis 30 Gew.-% und an Hydroxypropoxyl-Gruppen von 1 bis 15 Gew.-%, jeweils bezogen auf den nichtionischen Celluloseether, sowie die aus dem Stand der Technik bekannten Polymere der Phthalsäure und/oder der Terephthalsäure bzw. von deren Derivaten, insbesondere Polymere aus Ethylenterephthalaten und/oder Polyethylenglykolterephthalaten oder anionisch und/oder nichtionisch modifizierten Derivaten von diesen.

Weitere geeignete Inhaltsstoffe der Mittel sind wasserlösliche anorganische Salze wie Bicarbonate, Carbonate, die bereits genannten amorphen Silikate oder Mischungen aus diesen; insbesondere werden Alkalicarbonat und amorphes Alkalisilikat eingesetzt. Der Gehalt der Mittel an Natriumcarbonat beträgt dabei vorzugsweise bis zu 20 Gew.-%, vorteilhafterweise zwischen 5 und 15 Gew.-%.

Unter den als Bleichmittel dienenden, in Wasser H₂O ₂ liefernde Verbindungen haben das Natriumperborattetrahydrat und das Natriumperboratmonohydrat besondere Bedeutung. Weitere brauchbare Bleichmittel sind beispielsweise Natriumpercarbonat, Peroxypyrophosphate, Citratperhydrate sowie H₂O₂ liefernde persaure Salze oder Persäuren, wie Perbenzoate, Peroxophthalate, Diperazelainsäure, Phthaloiminopersäure oder Diperdodecandisäure. Der Gehalt der Mittel an Bleichmitteln beträgt vorzugsweise 5 bis 25 Gew.-% und insbesondere 10 bis 20 Gew.-%, wobei vorteilhafterweise Perboratmonohydrat oder Percarbonat eingesetzt wird.

Um beim Waschen bei Temperaturen von 60°C und darunter eine verbesserte Bleichwirkung zu erreichen, können Bleichaktivatoren in die Präparate eingearbeitet werden. Beispiele hierfür sind mit H₂O₂ organische Persäuren bildende N-Acyl- bzw. O-Acyl- Verbindungen, vorzugsweise N,N'-tetraacylierte Diamine, p-(Alkanoyloxy) benzolsulfonate, ferner Caprolactam-Derivate, Carbonsäureanhydride und Ester von Polyolen wie Glucosepentaacetat. Weitere bekannte Bleichaktivatoren sind acetylierte Mischungen aus Sorbitol und Mannitol, wie sie beispielsweise in der europäischen Patentanmeldung EP-A-0 525 239 beschrieben werden. Der Gehalt der bleichmittelhaltigen Mittel an Bleichaktivatoren liegt in dem üblichen Bereich, vorzugsweise zwischen 1 und 10 Gew.-% und insbesondere zwischen 3 und 8 Gew.-%. Besonders bevorzugte Bleichaktivatoren sind N,N,N',N'-Tetraacetylethylendiamin (TAED), 1,5-Diacetyl-2,4-dioxo-hexahydro-1,3,5-triazin (DADHT) und acetylierte Sorbitol-Mannitol-Mischungen (SORMAN).

Beim. Einsatz in maschinellen Waschverfahren kann es von Vorteil sein, den Mitteln übliche Schauminhibitoren zuzusetzen. Als Schauminhibitoren eignen sich beispielsweise Seifen natürlicher oder synthetischer Herkunft, die einen hohen Anteil an C₁₈-C₂₄-Fettsäuren aufweisen. Geeignete nichttensidartige Schauminhibitoren sind beispielsweise Organopolysiloxane und deren Gemische mit mikrofeiner, ggf. silanierter Kieselsäure sowie Paraffine, Wachse, Mikrokristallinwachse und deren Gemische mit silanierter Kieselsäure oder Bistearylethylendiamid. Mit Vorteilen werden auch Gemische aus verschiedenen Schauminhibitoren verwendet, z. B. solche aus Silikonen, Paraffinen oder Wachsen. Vorzugsweise sind die Schauminhibitoren, insbesondere Silikon- und/oder Paraffin-haltige Schauminhibitoren, an eine granulare, in Wasser lösliche bzw. dispergierbare Trägersubstanz gebunden. Insbesondere sind dabei Mischungen aus Paraffinen und Bistearylethylendiamiden bevorzugt.

Als Salze von Polyphosphonsäuren werden vorzugsweise die neutral reagierenden Natriumsalze von beispielsweise 1-Hydroxyethan-1,1- diphosphonat, Diethylentriaminpentamethylenphosphonat oder Ethylendiamintetramethylenphosphonat in Mengen von 0,1 bis 1,5 Gew.-% verwendet.

Als Enzyme kommen insbesondere solche aus der Klasse der Hydrolasen, wie der Proteasen, Lipasen bzw. lipolytisch wirkenden Enzyme, Amylasen, Cellulasen bzw. deren Gemische in Frage. Auch Oxireduktasen sind geeignet.

Besonders gut geeignet sind aus Bakterienstämmen oder Pilzen, wie Bacillus subtilis, Bacillus licheniformis, Streptomyces griseus und Humicola insolens gewonnene enzymatische Wirkstoffe. Vorzugsweise werden Proteasen vom Subtilisin-Typ und insbesondere Proteasen, die aus Bacillus lentus gewonnen werden, eingesetzt. Dabei sind Enzymmischungen, beispielsweise aus Protease und Amylase oder Protease und Lipase bzw. lipolytisch wirkenden Enzymen oder Protease und Cellulase oder aus Cellulase und Lipase bzw. lipolytisch wirkenden Enzymen oder aus Protease, Amylase und Lipase bzw. lipolytisch wirkenden Enzymen oder Protease, Lipase bzw. lipolytisch wirkenden Enzymen und Cellulase, insbesondere jedoch Protease -und/oder Lipase-haltige Mischungen bzw. Mischungen mit lipolytisch wirkenden Enzymen von besonderem Interesse. Beispiele für derartige lipolytisch wirkende Enzyme sind die bekannten Cutinasen. Auch Peroxidasen oder Oxidasen haben sich in einigen Fällen als geeignet erwiesen. Zu den geeigneten Amylasen zählen insbesondere α-Amylasen, lso-Amylasen, Pullulanasen und Pektinasen. Als Cellulasen werden vorzugsweise Cellobiohydrolasen, Endoglucanasen und Glucosidasen, die auch Cellobiasen genannt werden, bzw. Mischungen aus diesen eingesetzt. Da sich die verschiedenen Cellulase-Typen durch ihre CMCase- und Avicelase-Aktivitäten unterscheiden, können durch gezielte Mischungen der Cellulasen die gewünschten Aktivitäten eingestellt werden.

Die Enzyme können an Trägerstoffen adsorbiert und/oder in Hüllsubstanzen eingebettet sein, um sie gegen vorzeitige Zersetzung zu schützen. Der Anteil der Enzyme, Enzymmischungen oder Enzymgranulate kann beispielsweise etwa 0,1 bis 5 Gew.-%, vorzugsweise 0,1 bis etwa 2 Gew.-% betragen.

Vergrauungsinhibitoren haben die Aufgabe, den von der Faser abgelösten Schmutz in der Flotte suspendiert zu halten und so das Wiederaufziehen des Schmutzes zu verhindern. Hierzu sind wasserlösliche Kolloide meist organischer Natur geeignet, beispielsweise die wasserlöslichen Salze polymerer Carbonsäuren, Leim, Gelatine, Salze von Ethercarbonsäuren oder Ethersulfonsäuren der Stärke oder der Cellulose oder Salze von sauren Schwefelsäureestern der Cellulose oder der Stärke. Auch wasserlösliche, saure Gruppen enthaltende Polyamide sind für diesen Zweck geeignet. Weiterhin lassen sich lösliche Stärkepräparate und andere als die obengenannten Stärkeprodukte verwenden, z. B. abgebaute Stärke, Aldehydstärken usw. Auch Polyvinylpyrrolidon ist brauchbar. Bevorzugt werden jedoch Celluloseether, wie Carboxymethylcellulose (Na-Salz) Methylcellulose, Hydroxyalkylcellulose und Mischether, wie Methylhydroxyethylcellulose, Methylhydroxypropylcellulose, Methylcarboxymethylcellulose und deren Gemische, sowie Polyvinylpyrrolidon beispielsweise in Mengen von 0,1 bis 5 Gew.-%, bezogen auf die Mittel, eingesetzt.

Die Mittel können als optische Aufheller Derivate der Diaminostilbendisulfonsäure bzw. deren Alkalimetallsalze enthalten. Geeignet sind z. B. Salze der 4,4'-Bis(2-anilino-4-morpholino-1,3,5- triazinyl-6-amino)stilben-2,2'-disulfonsäure oder gleichartig aufgebaute Verbindungen, die anstelle der Morpholino-Gruppe eine Diethanolaminogruppe, eine Methylaminogruppe, eine Anilinogruppe oder eine 2-Methoxyethylaminogruppe tragen. Weiterhin können Aufheller vom Typ der substituierten Diphenylstyryle anwesend sein, z. B. die Alkalisalze des 4,4'-Bis(2-sulfostyryl)-diphenyls, 4,4'-Bis(4-chlor-3-sulfostyryl)- diphenyls, oder 4- (4-Chlorstyryl)-4'-(2-sulfostyryl)-diphenyls. Auch Gemische der vorgenannten Aufheller können verwendet werden.

Ein weiterer Gegenstand der Erfindung ist ein vorzugsweise teilchenförmiges Wasch- und/oder Reinigungsmittel, welches erfindungsgemäße Granulate aus einem der erfindungsgemäßen Verfahren enthält. In einer bevorzugten Ausführungsform enthält das Wasch- und/oder Reinigungsmittel dabei mehrere Granulate aus mehreren Verfahrensvarianten, also mit verschiedenen Löslichkeitsprofilen.

Um die erwünschte Zusammensetzung des vorzugsweise teilchenförmigen Wasch- und/oder Reinigungsmittels zu erhalten, sind vorteilhafterweise ergänzend zu dem erfindungsgemäßen Granulat auch übliche Aufbereitungskomponenten sowie vorzugsweise ein weiteres oder weitere Zumischgranulate in der Abmischung des teilchenförmigen Wasch- und/oder Reinigungsmittels enthalten.

Der Einsatz dieser Zumischgranulate ist vorteilhaft, um insbesondere weitere Aniontensidanteile und/oder um insbesondere (Co-)Polymer(e) und/oder Wasserglas in das Wasch- und/oder Reinigungsmittels zu inkorporieren.

Das zusätzliche Zumischgranulat enthält somit vorzugsweise solche Bestandteile, die in dem ersten erfindungsgemäßen Granulat gänzlich fehlen und/oder vorzugweise auch weitere solche Bestandteile, die zwar schon im ersten erfindungsgemäßen Granulat enthalten sind, deren Anteil bezogen auf die Gesamtzusammensetzung des gesamten Wasch- und/oder Reinigungsmittels aber zur Rezepturoptimierung erhöht werden kann oder muß. Neben üblichen Trägersubstanzen wie vorzugsweise Sulfat, Soda, Tripolyphosphat oder Zeolithen kann es sich dabei insbesondere um Aniontenside, Silikate und (Co-)Polymerisate handeln. Das zusätzliche Zumischgranulat kann dabei entsprechend einem dem Fachmann aus dem Stand der Technik geläufigen Verfahren hergestellt werden.

Die Kombination beider Granulate führt abhängig von der Verfahrensvariante bei der Herstellung des erfindungsgemäßen Granulates zu teilchenförmigen Wasch- und/oder Reinigungsmitteln, die bei an sich gleicher Stoffzusammensetzung in Bezug auf das gesamte teilchenförmige Wasch- und/oder Reinigungsmittel dennoch unterschiedliche Eigenschaften haben, beispielsweise was die Löslichkeit dieser Mittel betrifft. Diese Eigenschaften werden vorteilhafterweise im wesentlichen durch die Eigenschaften der im Wasch- und/oder Reinigungsmittel enthaltenen erfindungsgemäßen Granulate beeinflusst.

Gemäß einer bevorzugten Ausführungsform enthalten die Wasch- und/oder Reinigungsmittel neben den erfindungsgemäßen Granulaten weitere teilchenförmige Wasch- und/oder Reinigungsmittelbestandteile, insbesondere Aniontensid-haltige und/oder Wasserglas/(Co-)Polymer-haltige Zumischgranulate, bei welchen es sich insbesondere um Sprühtrocknungsprodukte handelt, wobei es sich bei dem Polymeren beispielsweise um Polyacrylsäure und deren Natriumsalze bzw. Polyacrylate handelt bzw. bei den Copolymeren beispielsweise um solche der Acrylsäure mit Maleinsäure.

Nach einer anderen bevorzugten Ausführungsform handelt es sich bei dem ZumischGranulat um weiter(e), entsprechend einem erfindungsgemäßen Verfahren hergestellten Granulat(e), wobei vorzugsweise als Flüssigkomponenten bei der Herstellung dieses Zumischgranulates nur wässerige Lösungen von Komponenten aus Wasch - und Reinigungsmitteln zum Einsatz kommen, wobei insbesondere Silikat- und/oder (Co-)Polymerlösungen besonders bevorzugt sind.

Nach einer weiteren bevorzugten Ausführungsform enthalten die Wasch- und/oder Reinigungsmittel zumindest 30 Gew.-%, vorzugsweise zumindest 40 Gew.-%, vorteilhafterweise zumindest 50 Gew.-%, insbesondere zumindest 60 Gew.-% der erfindungsgemäßen Granulate (ohne Zumischgranulate).

Wie gefunden wurde, verschlechtert sich die Löslichkeit der Granulate vorzugsweise dann, wenn bei der Granulation mit steigenden Flüssigkeitsanteilen gearbeitet wird, insbesondere wenn als Granulationsflüssigkeit anionische Tenside eingesetzt werden bzw. insbesondere wenn die Granulationsflüssigkeit anionische Tenside oder deren Vorstufen enthält.

Zur Herstellung von Wasch- und/oder Reinigungsmitteln, die vorzugsweise sehr gut löslich und fein sind, werden neben den üblichen dem Fachmann bekannten Aufbereitungskomponenten ein erfindungsgemäßes Granulat sowie ein weiteres Zumischgranulat, welches die gewünschten restliche Komponenten enthält und vorzugsweise durch Sprühtrocknung hergestellt wird, vermischt. Dabei ist es vorteilhaft wenn das enthaltene Aniontensid auf das erfindungsgemäße Granulat und auf das zweite Granulat aufgeteilt sind, so daß vorzugsweise nicht mehr als 70 Gew-% der im gesamten Wasch- und/oder Reinigungsmittel enthaltenen Aniontenside über das erfindungsgemäße Granulat und vorzugsweise nicht weniger als 30 Gew.-% über das zweite Granulat eingebracht werden. Das zweite Granulat enthält dabei vorzugsweise Silikat und (Co-)polymerisatanteile.

Das erfindungsgemäße Granulat hat dann vorzugsweise eine Partikelgröße d₅₀ von 0,3 bis 0,4 mm. Das resultierende teilchenförmige Wasch- und/oder Reinigungsmittel hat dann vorzugsweise eine Partikelgröße d₅₀ von 0,4 bis 0,6 mm. Sehr gut lösliche Wasch- und/oder Reinigungsmittel sind beispielsweise in 30°C warmem Wasser in 90 Sekunden mit Rückständen von vorzugsweise 1-1,5 Gew.-% nahezu vollständig aufgelöst. Die eingesetzten Granulate sind dabei insbesondere vollständig aufgelöst.

Zur Herstellung von Wasch- und/oder Reinigungsmitteln, die gut löslich sind, werden neben den üblichen Aufbereitungskomponenten mindestens ein erfindungsgemäßes Granulat sowie ein weiteres Zumischgranulat eingesetzt, welches weitere Komponenten enthält und vorzugsweise durch Sprühtrocknung hergestellt ist. Im Gegensatz zu dem zuvor beschriebenen Produkt sind die auf das fertige Wasch- und/oder Reinigungsmittel bezogenen Anteile an Aniontensiden vollständig im erfindungsgemäßen Granulat enthalten. Die Gesamtanteile an Silikat und (Co-)Poly-merisat sind vorzugsweise vollständig in dem Zumischgranulat enthalten. Sowohl das erfindungsgemäße Granulat wie auch das resultierende fertige Wasch- und/oder Reinigungsmittel haben eine Partikelgröße d₅₀ von vorzugsweise 0,8 bis 1,0 mm. Gut lösliche Wasch- und/oder Reinigungsmittel sind in 30°C warmem Wasser in 90 Sekunden mit Rückständen von vorzugsweise 1,5 bis 2,0 Gew.-% gelöst. Die eingesetzten erfindungsgemäßen Granulate sind vorzugsweise mit Rückständen von 1 Gew.-% gelöst.

Zur Herstellung von Wasch- und/oder Reinigungsmitteln, die noch gut löslich, aber gröber sind, werden neben den üblichen Aufbereitungskomponenten mindestens ein erfindungsgemäßes Granulat sowie ein weiteres Zumischgranulat eingesetzt, welches weitere Komponenten enthält und vorzugsweise durch Sprühtrocknung hergestellt ist. Die Zugabe der Flüssigkomponente ist auf Mischer/Granulator und Wirbelschicht aufgeteilt. Dabei werden vorzugsweise alle Aniontensidbestandteile die im gesamten Wasch- und/oder Reinigungsmittel enthalten sind, über das erfindungsgemäße Granulat in das Wasch- und/oder Reinigungsmittel eingebracht. Die Silikat und (Co-)Polymerisatanteile sind vorzugsweise vollständig im Zumischgranulat enthalten.

Das erfindungsgemäße Granulat und das Wasch- und/oder Reinigungsmittel haben in diesem Fall eine Partikelgröße d₅₀ von vorzugsweise 1,3 bis 1,6 mm. Diese gut lösliche, groben Wasch- und/oder Reinigungsmittel sind in 30°C warmem Wasser in 90 Sekunden mit Rückständen von vorzugsweise 2,5 bis 3,0 Gew.-% gelöst. Die eingesetzten Granulate sind vorzugsweise mit Rückständen von ca. 2 Gew.-% gelöst.

Granulate mit verzögerter Löslichkeit sind Granulate, die zunächst kaum in Lösung gehen, aber dann, vorzugsweise nach Auflösung einer äußeren Hülle zügig und schnell wie die zuvor beschriebenen Granulate in Lösung gehen. Im bevorzugten Fall besteht die Hüllschicht aus Silikaten und / oder (Co-)Polymeren. Das Granulat enthält im Kern vorzugsweise die Aniontenside. Derartige Granulate sind für den Einsatz in einer Waschmitteltablette sehr vorteilhaft und führen überraschenderweise zu einem schnellen Tablettenzerfall und guter Löslichkeit der Tablette.

Vorzugsweise können Granulate mit verzögerter Löslichkeit durch Aufdüsung der gesamten anionischen Tensidanteile im Mischer/Granulator und Aufdüsung von wässerigen Silikat - und (Co-)Polymerisatlösung in der Wirbelschicht erhalten werden. Weitere Anteile an (Co-)Polymerisat und Silikat werden vorzugsweise über ein weiteres Zumischgranulat, vorzugsweise durch Sprühtrocknung erhältlich, dem Wasch- und Reinigungsmittel zugemischt. Bei der Herstellung dieses Zumischgranulates ist es beispielsweise auch vorteilhaft, wenn vorzugsweise ca. 66% der wässerigen Flüssigkeiten auf z.B. Soda und Sulfat im Mischer/Granulator und vorzugsweise die restlichen ca. 34 % in der Wirbelschicht aufgedüst werden. Das verzögert lösliche Granulat hat eine mittlere Korngröße d₅₀ von vorzugsweise 1,3 bis 1,5 mm, die Löslichkeit in 30°C warmen Wasser ist vorzugsweise so verzögert, das nach 5 Minuten noch Rückstände von vorzugsweise 5 bis 6 Gew.-% festzustellen sind. Das zweite Zumischgranulat hat eine mittlere Korngröße d₅₀ von vorzugsweise 1,0 mm und ist vorzugsweise nach 90 Sekunden rückstandsfrei aufgelöst.
Diese Granulate mit verzögerter Löslichkeit sind insbesondere für Waschmitteltabletten von großem Interesse, auf welche weiter unten eingegangen wird.

Die Feinteiligkeit und die Löslichkeit des Granulates sind vorzugsweise insgesamt abhängig von den Gesamtanteilen aufgebrachter Flüssigkeit im Granulat. Grobe Granulate, bei denen ein hoher Flüssigkeitsanteil zur Granulation verwendet wurde, sind im allgemeinen schlechter löslich als feinteilige Granulate, bei denen weniger Flüssigkeitsanteile zur Granulation eingesetzt wurden. Da die zur Granulation eingesetzten Flüssigkeitsanteile vorzugsweise Wirksubstanzen der Wasch - und Reinigungsmittel sind, ist es zweckmäßig bei Einsatz geringerer Flüssigkeitsanteile für die erfindungsgemäßen Granulate, daß die fehlenden Wirksubstanzen im aufbereiteten Wasch- und/oder Reinigungsmittel, welches die erfindungsgemäßen Granulate enthält, durch eine zusätzliche, die fehlenden Anteile an Wirksubstanz enthaltende, Komponente ergänzt werden. Dies ist vorzugsweise das zuvor genannte zweite Granulat bzw. Zumischgranulat, welches insbesondere ein Sprühtrocknungsprodukt ist.

Es wurde überraschend gefunden, daß vorzugsweise feinteilige Wasch- und/oder Reinigungsmittel-Abmischungen, die neben einem feinteiligen erfindungsgemäßen Granulat, bei dessen Granulation nur ein Teil der gesamten, in das Wasch- und/oder Reinigungsmittel einzubringenden Flüssigkomponenten, insbesondere Aniontensidkomponenten, verwendet wurde, und welche noch zusätzlich ein mit den restlichen Flüssigkeiten hergestelltes Zumischgranulat enthalten, deutlich besser löslich sind als Wasch- und/oder Reinigungsmittelabmischungen, die Granulate enthalten, bei deren Granulation höhere Flüssigkeitsanteile, vorzugsweise die gesamten, in das Wasch- und/oder Reinigungsmittel einzubringenden Flüssigkomponenten, insbesondere Aniontensidkomponenten, verwendet wurden.

Daher sind solche Wasch- und/oder Reinigungsmittel eine bevorzugte Ausführungsform der Erfindung. Die zweite Zumischgranulatkomponente kann nach einem üblichen Granulationsverfahren oder auch einem erfindungsgemäßen Verfahren hergestellt werden, vorzugsweise aber durch Sprühtrocknung.

Ein weiterer Gegenstand der Erfindung ist eine Wasch- und/oder Reinigungsmitteltablette, enthaltend erfindungsgemäße Granulate aus einem der erfindungsgemäßen Verfahren, insbesondere eines erfindungsgemäßen Verfahrens, bei welchem die in der Wirbelschicht zu versprühenden Komponenten keine Aniontensidsäure enthalten, insbesondere tensidfrei sind und vorzugsweise zumindest anteilsweise filmbildende Bestandteile aufweisen, und/oder enthaltend ein erfindungsgemäßes Wasch- und/oder Reinigungsmittel. Vorzugsweise sind die entsprechenden erfindungsgemäßen Granulate in den Tabletten zumindest zu 20 Gew.-%, vorteilhafterweise zumindest zu 30 Gew.-%, in weiter vorteilhafter Weise zumindest zu 40 Gew.-%, noch vorteilhafter zumindest zu 50 Gew.-%, insbesondere zumindest zu 60 Gew.-% enthalten, bezogen auf das Gesamtgewicht der Tablette.

Überraschenderweise wurde gefunden, daß gerade jenes Granulat, bei dessen Herstellung die in der Wirbelschicht zu versprühenden Komponenten keine Aniontensidsäure enthalten, insbesondere tensidfrei sind und zumindest anteilsweise filmbildende Bestandteile aufweisen, welches sich verzögert löst, einen sehr guten Tablettenzerfall möglich macht, wenn die Tablette neben diesem Granulat ein typisches Sprengmittel enthält.
Dieser paradox erscheinende Sachverhalt wird, ohne sich an diese oder eine andere Theorie zu binden, dadurch erklärt, daß davon auszugehen ist, daß bei Einsatz des verzögert löslichen Granulates eine Anlösung der Einzelpartikel unter Gelbildung der Tenside mit Wasser verzögert erfolgt und deshalb zunächst das Sprengmittel den Zerfall der Tablette in die einzelnen Granulate bewirkt. Danach können sich die Granulate auflösen. Dabei zerfällt die Tablette innerhalb weniger Sekunden.

Tabletten, welche die im Vergleich schneller löslichen Granulate beinhalten, zerfallen dagegen nicht bereits nach wenigen Sekunden, sondern erst im Minutenbereich bzw. überhaupt nicht.

Nach einer bevorzugten Ausführungsform der Erfindung enthält die Tablette mindestens ein quellfähiges Desintegrationshilfsmittel. Gleichermaßen bevorzugt sind alle üblichen Sprengmittel.

Eine Tablette, die ein quellfähiges Desintegrationshilfsmittel auf Cellulosebasis, vorzugsweise in granularer, cogranulierter oder kompaktierter Form, in Mengen von 0,5 bis 10 Gew.-%, vorzugsweise von 1 bis 8 Gew.-% und insbesondere von 2 bis 7 Gew.-%, jeweils bezogen auf das Formkörpergewicht, enthält, ist eine bevorzugte Ausführungsform der Erfindung.

Wenn die Tablette zumindest anteilsweise von einer wasserlöslichen Umhüllung umgeben ist, wobei diese ein oder mehrere Materialien aus der Gruppe (gegebenenfalls acetalisierter) Polyvinylalkohol (PVAL) und/oder PVAL-Copolymere, Polyvinylpyrrolidon, Polyethylenoxid, Polyethylenglykol, Gelatine, Cellulose und deren Derivate, insbesondere MC, HEC, HPC, HPMC und/oder CMC, und/oder Copolymere sowie deren Mischungen, umfaßt, so liegt eine bevorzugte Ausführungsform der Erfindung vor.

Ein weiterer Gegenstand der Erfindung liegt in der Verwendung der zuvor beschriebenen Tabletten in Haushaltswaschmaschinen oder- Geschirrspülmaschinen und ebenso in der Verwendung als einspülkammerdosierbare Waschmitteltabletten für Haushaltswaschmaschinen.

## Patentansprüche

1. Verfahren zur Herstellung von Granulaten, insbesondere Wasch- und/oder Reinigungsmittelgranulaten, durch Granulierung fester und flüssiger Komponenten unter Verwendung von einem oder mehreren Mischer(n)/Granulator(en) in einer ersten Verfahrensstufe mit nachgeschaltetem Wirbelschichtgranulator in einer zweiten Verfahrensstufe, **dadurch gekennzeichnet, daß** über die Aufteilung der Flüssigkomponente auf Mischer/Granulator und Wirbelschicht eine Einstellung der Granulatlöslichkeit vorgenommen wird, wobei die zweite Verfahrensstufe eine Zugabe von Flüssigkeit beinhaltet und nicht mehr als 5 Gew.-% der bei der Granulatherstellung eingesetzten flüssigen Komponenten in den Wirbelschichtgranulator gegeben werden und die flüssige Komponente zumindest anteilsweise Aniontensidsäure, anionische Tenside, nichtionische Tenside, die bei der Verfahrenstemperatur in flüssiger Form vorliegen, Silikat- und/oder (Co-)Polymerlösungen enthält.

2. Verfahren nach Anspruch 1, **dadurch gekennzeichnet, daß** im Mischer/Granulator ein partikuläres Ausgangsmaterial verarbeitet wird, welches vorzugsweise für den Einsatz in Wasch- und/oder Reinigungsmitteln geeignet ist, wobei insbesondere zumindest anteilsweise Substanzen ausgewählt aus der Gruppe der Gerüststoffe, Polymere und/oder Neutralsalze eingesetzt werden.

3. Verfahren nach Anspruch 2, **dadurch gekennzeichnet, daß** das partikuläre Ausgangsmaterial wenigstens anteilsweise feste Neutralisationsmittel, vorzugsweise eine oder mehrere Substanzen aus der Gruppe Natriumcarbonat, Natriumhydroxid, Natriumsesquicarbonat, Kaliumhydroxid und/oder Kaliumcarbonat enthält, wobei das Vorhandensein von Natriumcarbonat stark bevorzugt ist.

4. Verfahren nach einem der vorigen Ansprüche 2 oder 3, **dadurch gekennzeichnet, daß** das partikuläre Ausgangsmaterial Feststoffe aus der Gruppe der Silikate, Aluminiumsilikate, Sulfate, Citrate und/oder Phosphate enthält.

5. Verfahren nach einem der Ansprüche 1 bis 4, **dadurch gekennzeichnet, daß** die flüssige Komponente zumindest anteilsweise Aniontensidsäure enthält, vorzugsweise eine oder mehrere Substanz(en) aus der Gruppe der Garbonsäuren, der Schwefelsäurehalbester und der Sulfonsäuren, vorteilhafterweise aus der Gruppe der Fettsäuren, der Fettalkylschwefelsäuren und der Alkylarylsulfonsäuren, insbesondere aus der Gruppe der C₈₋₁₆-, insbesondere der C₉₋₁₃-Alkylbenzolsulfonsäuren.

6. Verfahren nach einem der Ansprüche 1 bis 5, **dadurch gekennzeichnet, daß** alle Silikat- und/oder (Co-)Polymerlösungen enthaltenden Bestandteile in der zweiten Verfahrensstufe eingebracht werden

7. Verfahren nach Anspruch 1 bis 6, **dadurch gekennzeichnet, daß** der Gehalt der Verfahrensprodukte an neutralisierten Aniontensidsäuren maximal 50 Gew.-%, vorzugsweise 8 bis 42 Gew.-%, besonders bevorzugt 10 bis 35 Gew.-% und insbesondere 15 bis 25 Gew.-% beträgt.

8. Verfahren nach einem der Ansprüche 1 bis 7, **dadurch gekennzeichnet, daß** alle Aniontensidsäure enthaltende Bestandteile, insbesondere alle tensidischen Bestandteile in der ersten Verfahrensstufe eingebracht werden.

9. Wasch- und/oder Reinigungsmittel, enthaltend Granulate aus einem der Verfahren nach den Ansprüchen 1 bis 8.

10. Mittel nach Anspruch 9, **dadurch gekennzeichnet, daß** es neben diesen Granulaten gemäß Ansprüchen 1 bis 8 weitere teilchenförmige Wasch- und/oder Reinigungsmittelbestandteile enthält, insbesondere Aniontensid-haltige und/oder Wasserglas/(Co-)Polymer-haltige Zumischgranulate**.**

11. Mittel nach Anspruch 10, **dadurch gekennzeichnet, daß** es sich bei den Zumisch-Granulaten um Sprühtrocknungsprodukte handelt.

12. Mittel nach Anspruch 10, **dadurch gekennzeichnet, daß** es sich bei den Zumisch-Granulaten um weitere(s), entsprechend einem der Verfahren nach den Ansprüchen 1 bis 8 hergestellten Granulat(e) handelt.

13. Mittel nach Anspruch 12 **dadurch gekennzeichnet, daß** als Flüssigkomponenten bei der Herstellung des Zumischgranulates nur wässerige Lösungen von Komponenten aus Wasch- und Reinigungsmitteln zum Einsatz kommen, wobei insbesondere Silikat- und/oder (Co-)Polymerlösungen besonders bevorzugt sind.

14. Mittel nach einem der Ansprüche 9 bis 13, **dadurch gekennzeichnet, daß** die Granulate (ohne Zumischgranulate) zumindest in Mengen von 30 Gew.-%, vorzugsweise von zumindest 40 Gew.-%, vorteilhafterweise von zumindest 50 Gew.-%, insbesondere von zumindest 60 Gew.-% enthalten sind, bezogen auf das ganze Mittel.

15. Wasch- und/oder Reinigungsmitteltablette, enthaltend Granulate aus einem der Wasch- und/oder Reinigungsmittel nach einem der Ansprüche 9 bis 14.

16. Tablette nach Anspruch 15, **dadurch gekennzeichnet, daß** es mindestens ein quellfähiges Desintegrationshilfsmittel enthält.

17. Tablette nach Anspruch 15 oder 16, **dadurch gekennzeichnet, daß** es ein quellfähiges Desintegrationshilfsmittel auf Cellulosebasis, vorzugsweise in granularer, cogranulierter oder kompaktierter Form, in Mengen von 0,5 bis 10 Gew.-%, vorzugsweise von 1 bis 8 Gew.-% und insbesondere von 2 bis 7 Gew.-%, jeweils bezogen auf das Formkörpergewicht, enthält.

18. Tablette nach einem der vorigen Ansprüche 15 bis 17, **dadurch gekennzeichnet, daß** es weitere teilchenförmige Wasch- und/oder Reinigungsmittelbestandteile enthält, insbesondere Aniontensid-haltige und/oder Wasserglasl(Co-)Polymer-haltige Zumischgranulate, bei welchen es sich vorteilhafterweise um Sprühtrocknungsprodukte handelt.

19. Verwendung von Tabletten nach einem der Ansprüche 15 bis 18 in Haushaltswaschmaschinen und/oder -Geschirrspülmaschinen.

20. Verwendung von Tabletten nach einem der Ansprüche 15 bis 18 als einspülkammerdosierbare Waschmitteltabletten für Haushaltswaschmaschinen.

## Claims

1. A method for producing granules, in particular washing and/or cleaning agent granules, by granulation of solid and liquid components with the use of one or more mixer(s)/granulator(s) in a first process step with a downstream fluidized bed granulator in a second process step, **characterized in that** it is proceeded with adjustment of the granule solubility by distributing the liquid components on the mixer/granulator and fluidized bed, wherein the second process step includes addition of liquid, and not more than 5% by weight of the liquid components applied in the granule production are introduced into the fluidized bed granulator, and the liquid component contains at least partly anionic surfactant acid, anionic surfactants, non-ionic surfactants, which exist in liquid form at the process temperature, silicate and/or (co-)polymer solutions.

2. The method according to claim 1, **characterized in that** a particulate starting material is processed in the mixer/granulator, which material is preferably suitable for application in washing and/or cleaning agents, wherein substances selected from the group of builders, polymers and/or neutral salts are particularly at least partly used.

3. The method according to claim 2, **characterized in that** the particulate starting material contains at least partly solid neutralization agents, preferably one or more substances from the group of sodium carbonate, sodium hydroxide, sodium sesquicarbonate, potassium hydroxide and/or potassium carbonate, wherein the presence of sodium carbonate is strongly preferred.

4. The method according to any of the preceding claims 2 or 3, **characterized in that** the particulate starting material contains solids from the group of silicates, aluminium silicates, sulfates, citrates and/or phosphates.

5. The method according to any of claims 1 to 4, **characterized in that** the liquid component contains at least partly an anionic surfactant acid, preferably one or more substances from the group of carboxylic acids, sulfuric acid half-esters, and sulfonic acids, advantageously from the group of fatty acids, fatty alkyl sulfuric acids, and alkyaryl sulfonic acids, in particular from the group of C₈-C₁₆, in particular C₉-C₁₃ alkyl benzene sulfonic acids.

6. The method according to any of claims 1 to 5, **characterized in that** all the constituents containing silicate and/or (co-)polymer solutions are incorporated in the second process step.

7. The method according to claims 1 to 6, **characterized in that** the content of neutralized anionic surfactant acids in the process products is at most 50% by weight, preferably from 8 to 42% by weight, more preferably from 10 to 35% by weight, and in particular from 15 to 25% by weight.

8. The method according to any of claims 1 to 7, **characterized in that** all the constituents containing anionic surfactant acid, in particular all surfactant constituents, are incorporated in the first process step.

9. A washing and/or cleaning agent, containing granules from one of the methods according to claims 1 to 8.

10. The agent according to claim 9, **characterized in that** in addition to these granules according to claims 1 to 8, it contains further particulate washing and/or cleaning agent constituents, in particular anionic surfactant-containing and/or water glass/(co-)polymer-containing additive granules.

11. The agent according to claim 10, **characterized in that** as for the additive granules, these are spray-drying products.

12. The agent according to claim 10, **characterized in that**, as for the additive granules, these are additional granule(s) produced in accordance with one of the methods according to claims 1 to 8.

13. The agent according to claim 12, **characterized in that** only aqueous solutions of components of washing and cleaning agents are applied as liquid components in the production of the additive granule, wherein silicate and/or (co-)polymer solutions are more preferred.

14. The agent according to any of claims 9 to 13, **characterized in that** the granules (without the additive granules) are contained at least in amounts of 30% by weight, preferably of at least 40% by weight, advantageously of at least 50% by weight, in particular of at least 60% by weight, based on the total agent.

15. A washing and/or cleaning agent tablet containing granules of one of the washing and/or cleaning agents according to any of claims 9 to 14.

16. The tablet according to claim 15, **characterized in that** it contains at least one swellable disintegration adjuvant.

17. The tablet according to any of claims 15 or 16, **characterized in that** it contains a swellable disintegration adjuvant based on cellulose, preferably in a granular, co-granulated or compacted form, in amounts from 0.5 to 10% by weight, preferably from 1 to 8% by weight, an in particular from 2 to 7% by weight each based on the molded body weight.

18. The tablet according to any of the preceding claims 15 to 17, **characterized in that** it contains further particulate washing and/or cleaning agent constituents, in particular anionic surfactant-containing and/or water glass/(co-)polymer-containing additive granules, as for which these are advantageously spray-drying products.

19. Use of tablets according to any of claims 15 to 18 in domestic washing machines and/or dishwashers.

20. Use of tablets according to any of claims 15 to 18 as washing agent tablets which may be dosed in the flushing-in chamber of domestic washing machines.

## Revendications

1. Procédé pour la fabrication de produits de granulation, en particulier des produits de granulation d'agents de lavage et/ou de nettoyage, par granulation de composants solides et liquides en utilisant un ou plusieurs mélangeurs/granulateurs dans une première étape opératoire, un granulateur à lit fluidisé étant monté à la suite dans une deuxième étape opératoire, **caractérisé en ce que**, via la répartition du composant liquide sur le(s) mélangeur(s)/granulateur(s) et sur le lit fluidisé, on procède à un réglage de la solubilité du produit de granulation, la deuxième étape opératoire renfermant une addition de liquide et une quantité qui n'est pas supérieure à 5 % en poids des composants liquides mis en oeuvre lors de la fabrication du produit de granulation étant introduite dans le granulateur à lit fluidisé et le composant liquide contenant au moins en partie, de l'acide tensioactif anionique, des agents tensioactifs anioniques, des agents tensioactifs non ioniques, qui sont présents sous forme liquide à la température opératoire, des solutions à base de silicates et/ou à base de (co)polymères.

2. Procédé selon la revendication 1, **caractérisé en ce qu'**on traite dans le mélangeur/granulateur une matière de départ particulaire qui est appropriée de préférence pour la mise en oeuvre dans des agents de lavage et/ou de nettoyage, en particulier des substances du groupe contenant des builders, des polymères et/ou des sels neutres étant mises en oeuvre, au moins en partie.

3. Procédé selon la revendication 2, **caractérisé en ce que** la matière de départ particulaire contient, au moins en partie, des agents de neutralisation solides, de préférence une ou plusieurs substances choisies parmi le groupe contenant du carbonate de sodium, de l'hydroxyde de sodium, du sesquicarbonate de sodium, de l'hydroxyde de potassium et/ou du carbonate de potassium, la présence de carbonate de sodium étant fortement préférée.

4. Procédé selon l'une quelconque des revendications précédentes 2 ou 3, **caractérisé en ce que** la matière de départ particulaire contient des substances solides du groupe des silicates, des silicates d'aluminium, des sulfates, des citrates et/ou des phosphates.

5. Procédé selon l'une quelconque des revendications 1 à 4, **caractérisé en ce que** le composant liquide contient, au moins en partie, un acide tensioactif anionique, de préférence une ou plusieurs substances du groupe des acides carboxyliques, des demi-esters d'acides sulfuriques et des acides sulfoniques, de préférence choisies parmi le groupe des acides gras, des acides alkylsulfuriques gras et des acides sulfoniques d'alkylaryle, en particulier choisis parmi le groupe des acides alkylbenzènesulfoniques en C₈-C₁₆, en particulier en C₉-C₁₃.

6. Procédé selon l'une quelconque des revendications 1 à 5, **caractérisé en ce que** tous les constituants contenant des solutions à base de silicates et/ou à base de (co)polymères sont incorporés dans la deuxième étape opératoire.

7. Procédé selon l'une quelconque des revendications 1 à 6, **caractérisé en ce que** la teneur des produits issus du procédé en acides tensioactifs anioniques neutralisés s'élève au maximum à 50 % en poids, de préférence de 8 à 42 % en poids, de manière particulièrement préférée de 10 à 35 % en poids et en particulier de 15 à 25 % en poids.

8. Procédé selon l'une quelconque des revendications 1 à 7, **caractérisé en ce que** tous les constituants contenant un acide tensioactif anionique, en particulier tous les constituants tensioactifs sont incorporés dans la première étape opératoire.

9. Agent de lavage et/ou de nettoyage contenant des produits de granulation issus d'un des procédés selon les revendications 1 à 8.

10. Agent selon la revendication 9, **caractérisé en ce qu'**il contient, à côté de ces produits de granulation selon les revendications 1 à 8, d'autres constituants particulaires d'agents de lavage et/ou de nettoyage, en particulier des produits de granulation d'addition par mélange contenant des agents tensioactifs anioniques et/ou contenant du verre soluble/des (co)polymères.

11. Agent selon la revendication 10, **caractérisé en ce qu'**il s'agit, en ce qui concerne les produits de granulation d'addition par mélange, de produits de séchage par pulvérisation.

12. Agent selon la revendication 10, **caractérisé en ce qu'**il s'agit, en ce qui concerne les produits de granulation d'addition par mélange, d'un autre ou de plusieurs autres produits de granulation préparés conformément à un des procédés selon les revendications 1 à 8.

13. Agent selon la revendication 12, **caractérisé en ce qu'**on met en oeuvre, à titre de composant liquide lors de la fabrication du produit de granulation d'addition par mélange, uniquement des solutions aqueuses de composants constitués d'agents de lavage et de nettoyage, en particulier des solutions à base de silicates et/ou à base de (co)polymères étant particulièrement préférées.

14. Agent selon l'une quelconque des revendications 9 à 13, **caractérisé en ce que** les produits de granulation (en l'absence de produits de granulation d'addition par mélange) sont contenus, au moins dans des quantités de 30 % en poids, de préférence d'au moins 40 % en poids, de manière préférentielle d'au moins 50 % en poids, en particulier d'au moins 60 % en poids, rapportés à l'agent dans sa totalité.

15. Pastilles d'agent de lavage et/ou de nettoyage, contenant des produits de granulation constitués d'un des agents de lavage et/ou de nettoyage selon l'une quelconque des revendications 9 à 14.

16. Pastille selon la revendication 15, **caractérisée en ce qu'**elle contient au moins un adjuvant de désintégration apte à gonfler.

17. Pastille selon la revendication 15 ou 16, **caractérisée en ce qu'**elle contient un adjuvant de désintégration apte à gonfler à base de cellulose, de préférence sous une forme granulaire, cogranulée ou compactée, dans des quantités de 0,5 à 10 % en poids, de préférence de 1 à 8 % en poids et en particulier de 2 à 7 % en poids, chaque fois rapportés au poids du corps moulé.

18. Pastille selon l'une quelconque des revendications précédentes 15 à 17, **caractérisé en ce qu'**elle contient d'autres constituants particulaires d'agents de lavage et/ou de nettoyage, en particulier des produits de granulation d'addition par mélange contenant des agents tensioactifs anioniques et/ou du verre soluble/des (co)polymères, produits à propos desquels il s'agit de manière préférentielle de produits de séchage par pulvérisation.

19. Utilisation de pastilles selon l'une quelconque des revendications 15 à 18, dans des lave-linge et/ou dans des lave-vaisselle domestique.

20. Utilisation de pastilles selon l'une quelconque des revendications 15 à 18, à titre de pastilles d'agents de lavage qui peuvent être introduits de manière dosée dans le bac de lessive pour des lave-linge domestiques.
